# EUROPEAN PATENT SPECIFICATION

(11) **EP 1 223 506 B1**
(45) Date of publication and mention of the grant of the patent: **13.12.2006**
(21) Application number: 01610006.7
(22) Date of filing: 16.01.2001
(51) Int. Cl.: G06F 7/58

(54) **Random number generator using compression**
Zufallszahlengenerator basierend auf Komprimierung
Générateur de nombres aléatoires se basant sur la compression

(43) Date of publication of application: 17.07.2002
(73) Proprietor: TELEFONAKTIEBOLAGET LM ERICSSON (publ), 164 83 Stockholm (SE)
(72) Inventor: Smeets, Ben, 240 10 Dalby (SE); Andersson, Stefan, 230 41 Klägerup (SE)
(74) Representative: Boesen, Johnny Peder

(56) References cited:
- EP-A- 0 136 681
- US-A- 5 606 322
- US-A- 5 757 923
- US-A- 5 778 069
- US-A- 6 076 097

## Description

The present invention relates to a random number generator adapted to receive a number of input bits based on at least one random or pseudo-random source, said generator comprising
- memory means comprising a state of bits,
- calculating means for applying a given function to at least one bit of said state resulting in at least one random number.

The present invention also relates to a method for generating at least a random number comprising the steps of
- receiving a number of input bits based on at least one random or pseudo-random source,
- storing in a memory a state of bits,
- applying a given function to at least one bit of said state resulting in at least one random number.

Additionally, the invention relates to a computer system for performing the method according to the invention and a computer readable-medium comprising a program, which may cause a computer to perform the method of the present invention.

Random numbers or pseudo random numbers (used interchangeably in the following) are used in many cryptographic and communication applications to provide randomly appearing symbols that e.g. may be used as session keys, random challenges, initialisation vectors, etc.

Unfortunately, random number generation is a very hard task to accomplish, for example general-purpose processors are not good at generating random numbers due to their intrinsic deterministic behaviour. One solution is to use the physical characteristics of a hardware entity/unit as a source of random input.

Additionally, state of the art cryptographically secure random number generators with a high level of unpredictability are computationally very demanding and are based on known computationally hard problems even if they are based on some characteristics of a hardware module. An account of various methods to produce random numbers is e.g. given in Chapter 5 of "The Handbook of Applied Cryptography, by A.J. Menezes, P.C. van Oorschot, and S.A. Vanstone, CRC Press 1997", which is incorporated herein by reference in its entirety.

Cryptographically secure random number generator based on computationally hard problems require very complex operations that are expensive in terms of hardware, power consumption and/or computational/execution time which is a problem especially in portable devices like a mobile phone, a PDA etc. Examples of such generator may be found in Section 5.5 of "The Handbook of Applied Cryptography, by A.J. Menezes, P.C. van Oorschot, and S.A. Vanstone, CRC Press 1997".

Examples of sources for random or pseudo-random data are: a current internal state of a hardware module/unit/device, date, time, free available memory, elapsed time between emission of particles during radioactive decay, thermal noise from semiconductor diodes or resistors, etc. or in general any source with a high degree of unpredictability/entropy.

Hardware-based random number generators in general also have some disadvantages like it is hard to find a hardware source with enough entropy and/or randomness and it is hard to generate random bits based on a hardware source at a sufficiently high rate since the hardware generally does not change state, parameters, etc. fast enough for being used as suitable input in random and/or pseudo random generation for some applications. Another problem is that the physical hardware source's statistical characteristic(s) changes over time as a result of environmental influences (e.g. temperature), aging and/or wear out, so that an initially 'good' random source may become less random due to these effects.

The ANSI X.9.17 (see "The Handbook of Applied Cryptography, by A.J. Menezes, P.C. van Oorschot, and S.A. Vanstone, CRC Press 1997", page 173) uses a cryptographic primitive, i.e. DES, to increase the unpredictability of the output of a random number generator. The DES encryption algorithm is a rather expensive (in terms of hardware complexity and/or number of CPU operations) solution and additionally still suffers from the undesired side effect that the source of random inputs may have drifting statistical characteristics.

Patent specification no. US 5,757,923 discloses an arrangement and a method of generating a number of pseudo-random or random numbers where a hardware-based/physical unit is sampled in order to obtain good quality random numbers as input. The obtained numbers are then data-shuffled in order to break sinusoidal correlations, compressed in order to increase information entropy, and hashed by a hashing function in order to obtain a random number sequence. Different groups of the obtained number sequence are then used as a basis for selecting feedback polynomial terms.

The embodiment of Figure 3 of US 5,757,923 is closest to the present invention. In the embodiment of Figure 3 random data (sampled from a hardware-based unit) is data-shuffled, Huffman encoded (i.e. compressed) resulting in compressed bits. To further ensure randomness the compressed bits are XOR'ed with a guaranteed non-repeating value like the actual date and time of day. The result is then hashed and the generated output is a pseudo-random number that is used as input for feedback polynomial selection.

A drawback of using the actual time and date to be combined with the compressed bits from the sampled source is that the time and date generally does not exhibit good random properties. The is especially the case if random output is needed at faster rates, since only the seconds of the overall value will have changed (if even the seconds have changed). Further, if the source that is sampled changes properties slowly, the overall state, i.e. the resulting compressed bits and bits representing the actual data and time, will not change, which will produce the same or a very similar random number, even after hashing has been performed.

Patent specification US 5,606,322 discloses a method and arrangement where a continuous circular shift register, containing a predetermined bit sequence, is connected to a pseudo-random number (pn) generator. The pn-generator may be realized using a LFSR or by sampling random phenomena, e.g. Johnson noise, diode current fluctuations, etc. In this way, a state comprising the content of the shift register and the pn-generator is obtained. The content of the bit register ensure that different initial conditions and therefore different pn-sequences are obtained. It is a static bit sequence that is in the bit register in the sense that it is the same bit sequence and shifted versions thereof. US 5,606,322 addresses the problem of ensuring divergence-diversity between a number of pn-generators e.g. used in connection with communication with a number of devices so that communication collisions may be avoided.

Patent specification US EP 0,136,681 discloses a system comprising voice scrambling dependent on generated codes used in connection with secure communication between telephones.

Patent specification US 6.076,97 discloses a system/method for generating random numbers at a high rate where no physical hardware units are used as a source for generating random numbers. The random numbers are generated on the basis of a value of the elapsed time over which a loop is counted on a multitasking computer. A use of hashing is mentioned in order to enhance the random properties. Compression is mentioned in the context of a test of randomness where compression is used as an indication or test of how random a sequence is.

The US patent specification no. 5,778,069 discloses a pseudo random number generator that assembles multiple bits from a number of different sources into an input bit string. A hash value is computed by using a hashing function on the input bit string, and a stream generator uses this hash value to produce an output bit string of random bits. The different sources may e.g. be an internal source, like a state register in the generator itself, an external source like a computer supplying an operating parameter (like current date, time, free available memory, etc.), and another external source like a program/application supplying bits relating to the execution of the program/application.

An object of the invention is to provide a random number generator that generates high quality random numbers securely and efficiently.

This object is achieved by a random number generator of the aforementioned kind that further comprises
- compression means for compressing said input bits resulting in a compressed bit string, which is stored in said memory means as at least a part of said state.

Hereby, a random number generator is provided, which greatly enhances the entropy of the random source(s) by using compression on bits representing the source(s). Additionally, any eventual problem regarding drifting statistical characteristics, e.g. due to temperature change, aging of components, etc. is minimised/eliminated.

The compression/coder means removes redundant data from the random source(s) and maximises the entropy of the input bits thereby enhancing the random quality of the generated random or pseudo-random symbol/sequence.

Preferably, the compression means are adaptive, i.e. capable of adapting to the varying statistical characteristics of the input data. Such means are generally known as universal source coding means.

The input bits are e.g. obtained by sampling the random source(s) at a given rate.

The random source(s) may be a combination of random or pseudo-random sources.

According to a preferred embodiment, the at least one random or pseudo-random source comprises at least one hardware source and said input bits represents at least one physical feature of said at least one hardware source.

Hereby, at least one hardware-based random or pseudo-random source is provided, which normally provides the generator with high quality random and/or pseudo-random input. The compression means ensures that the input stays high quality with respect to randomness and entropy thereby avoiding statistical drifting.

In accordance with one embodiment of the generator, the state further comprises at least a part of a state of a Finite State Machine (FSM).

In this way, the memory means may change state and thereby input for the calculating means even if the random or pseudo-random source(s) do not. This enables the use of random and/or pseudo-random sources, which are relatively slower, as input, while still having a relatively fast changing state, since the overall state, i.e. the state comprising a FSM and random/pseudo-random input, will change every clock cycle.

Additionally, it is generally simpler to ensure that a FSM does not have local cycles of possible states.

In accordance with another embodiment, the Finite State Machine (FSM) is a linear feedback shift register (LFSR) or a non-linear feedback shift register (FSR).

The LFSR is a FSM with good statistical properties and thereby increases the overall randomness and entropy in the state of the memory means.

A non-linear FSR have even better statistical properties, which increases the security at the cost of a small increase in complexity.

In a preferred embodiment, the memory means comprises a cyclic buffer having a length of at least one bit.

Hereby, very simple and efficient part of the memory means is provided.

In an preferred embodiment, the calculating means are adapted to compute at least one hash value resulting in at least one random number using a hashing function.

A hash function makes it virtually impossible to determine the input of the function on the basis of the output, which greatly increases the security of the generated random numbers/sequence.

Alternatively, the calculating means comprises feedback to the FSM, thereby increasing the output rate of random numbers.

In yet another embodiment, the hashing function is any one of:
- SHA-1,
- RIPEMD-160,
- MD5 or
- any other suitable hashing or similar function.

In a preferred embodiment, the compression means compresses input bits according to a Lempel-Ziv compression scheme.

The Lempel-Ziv algorithm is a well-known universal source coding method, i.e. it is adaptable, and is e.g. described in Ziv, Lempel, "A universal algorithm for sequential data compression", IEEE Transaction on Information Theory Vol. 23, no 5, p. 337-343, May 1977 and Ziv, Lempel "Compression of individual sequences via variable rate coding", IEEE Transactions on Information Theory, Vol. 24, no 5, p. 530-536, September 1978.

Alternatively, the compression means compresses the input bits according to another compression/encoding scheme/algorithm like PPM (partial pattern matching), Huffman, Tunstall etc. or other compression schemes used e.g. to obtain better compression, lower implementation costs, and/or execution speed.

In one embodiment, the random number generator is used in a portable device.

In a preferred embodiment, the portable device is a mobile telephone.

Another object of the invention is to provide a method that generates high quality random numbers secure and efficiently.

This object is achieved by a method of the aforementioned kind, which further comprises the step of
- compressing said input bits resulting in a compressed bit string, which is stored in said memory as at least a part of said state.

According to a preferred embodiment, the at least one random or pseudo-random source comprises at least one hardware source and said input bits represents at least one physical feature of said at least one hardware source.

According to one embodiment of the method, the state further comprises at least a part of a state of a Finite State Machine (FSM).

In accordance with another embodiment, Finite State Machine (FSM) is a linear feedback shift register (LFSR) or a non-linear feedback shift register (FSR).

In a preferred embodiment, the memory means comprises a cyclic buffer having a length of at least one bit.

In a preferred embodiment, the calculating means are adapted to compute at least one hash value resulting in said random number using a hashing function.

In yet another embodiment, the hashing function is any one of:
- SHA-1,
- RIPEMD-160,
- MD5 or
- any other suitable hashing or similar function.

In a preferred embodiment, the compression means compresses the input bits according to a Lempel-Ziv compression scheme.

In one embodiment, the method is used in a portable device.

In a preferred embodiment, the method is used in a mobile telephone.

The method and embodiments thereof correspond to the random number generator and embodiments thereof and has the same advantages for the same reasons why they are not described again.

Further, the invention relates to a computer-readable medium having stored thereon instructions for causing a processing unit or a computer system to execute the method described above and in the following. A computer-readable medium may e.g. be a CD-ROM, a CD-R, a DVD RAM/ROM, a floppy disk, a hard disk, a smart card, a network accessible via a network connection, a ROM, RAM, and/or Flash memory, etc. or generally any other kind of media that provides a computer system with information regarding how instructions/commands should be executed.

Hereby, when a computer is caused to retrieve electronic information - as a consequence of the contents of a computer-readable medium as described above - the advantages mentioned in connection with the corresponding method according to the invention are achieved.

Finally, the invention relates to a computer system comprising means adapted to execute a program, where the program, when executed, causes the computer system to perform the method according to the invention thereby obtaining the above mentioned advantages and/or effects.

By computer system is meant e.g. a system comprising one or more processor means, like a specialised or general purpose CPU or the like, which may be programmed/instructed at one time or another in such a way that the computer executes the method according to the invention fully or in part.

The present invention will now be described more fully with reference to the drawings, in which
Figure 1 illustrates schematically a functional block diagram of a random number generator according to the invention;
Figure 2 illustrates schematically a functional block diagram of a random number generator according to one embodiment of the invention;
Figure 3 illustrates a generalised functional block diagram of a random number generator according to another embodiment of the invention;
Figure 4 shows a flowchart illustrating the method according to the present invention;
Figure 5 shows a preferred embodiment of the invention, which may contain the random number generator and/or use the method according to the present invention;
Figure 6 illustrates an example of how the input bits are affected by the compression means;
Figure 7 illustrates a more detailed example of how the input bits may be affected by the compression means and what output is generated.

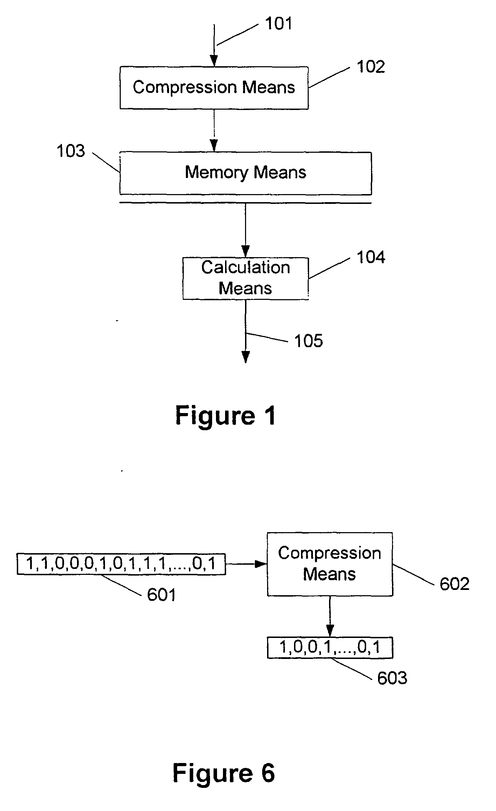

Figure 1 illustrates schematically a functional block diagram of a random number generator according to the invention. Shown are a number of input bits (101) representing information of one or more random and/or pseudo-random sources (not shown). The input bits (101) may e.g. be obtained by sampling the source(s) at an appropriate rate. In a preferred embodiment at least one of the sources is a hardware-based source.

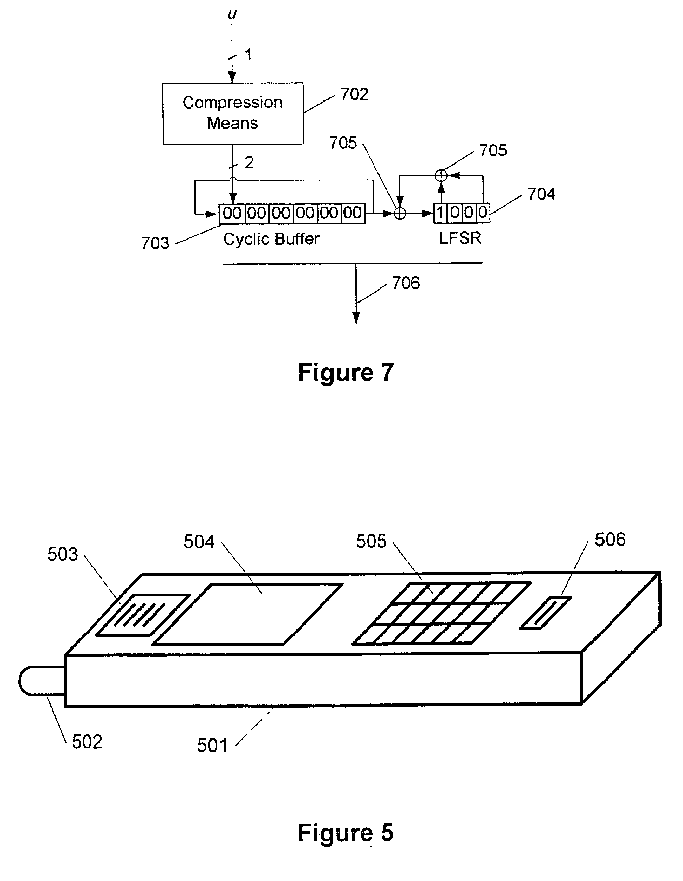

Compression means (102) receive the input bits (101) and compresses them according to a given compression scheme or method like the ones described above. An example of compression of the input bits (101) is given in connection with Figures 6 and 7. The compression means (102) removes redundant information from the input bits (101) thereby enhancing the entropy and the random properties of the input bits (101). The compression means (102) also removes the effect of drifting characteristics when using a hardware-based source.

Preferably, the compression means uses a Lempel-Ziv compression scheme.

Alternatively, the compression means compresses the input bits according to another compression/coding scheme/algorithm like PPM (partial pattern matching), Huffman, Tunstall etc. or other compression schemes used e.g. to obtain better compression, lower implementation costs, and/or execution speed.

The result from the compression means (102) is stored as at least a part of a state in memory means (103).

In one embodiment, the memory means (103) is a cyclic buffer with a length of at least one bit. In a cyclic buffer the last element of the buffer becomes the first element of the buffer when the buffer is full thereby avoiding overloading/overwriting.

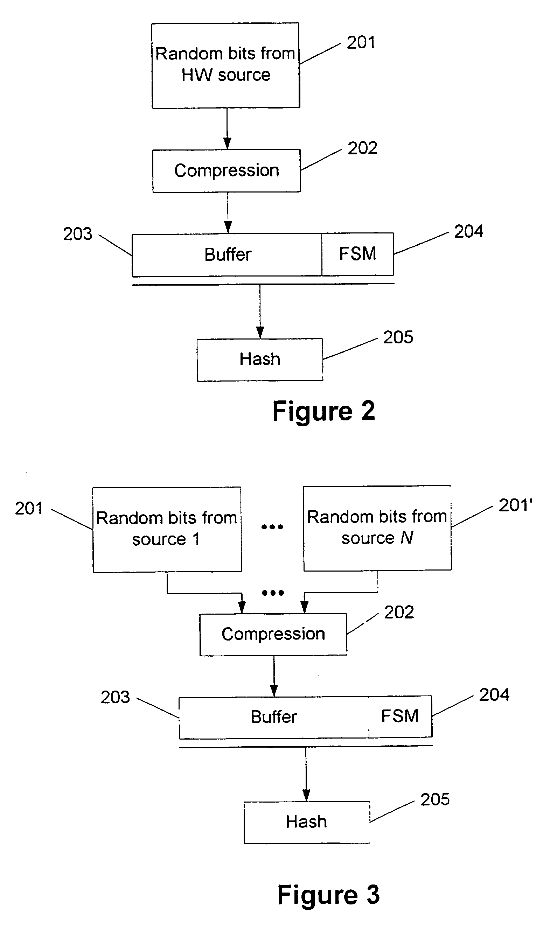

Alternatively, the state of the memory means (103) further comprises a Finite State Machine (FSM) or a copy of the state of a FSM, which ensures that the state of the memory means (103) is changed at every clock signal even though the random and/or pseudo random sources (and thereby the output from the compression means (102)) does not change. The FSM may be any suitable linear feedback shift register (LFSR) or a non-linear feedback shift register (FSR), and one example of a FSM is described in more detail later in connection with Figure 2 and 3. The FSM is shifted at least one step.

Calculation means (104) calculates a given function of the state of the memory means (103) in order to derive at least one random or pseudo random number (105). Preferably, a hashing function is used by the calculation means (104) in order to derive the random number(s) (105), which enhances the security of the process, since a hashing function ensures that it is almost impossible or at least very hard to derive the input of the hashing function on the basis of the output.

Alternatively, other functions may be used by the calculation means (104) in order to ensure the output of a random or pseudo-random number or sequence.

Alternatively, the calculation means (104) may provide feedback to the memory means (103) or more specifically to the FSM of the memory means (103), which increases the output rate of the random or pseudo-random number(s)/sequence, e.g. may the output from the calculation/hashing means (104) be split in two not necessarily equal parts where one part is the random number/sequence and the other part is used to control the FSM/LFSR.

Figure 2 illustrates schematically a functional block diagram of a random number generator according to one embodiment of the invention. Shown are a number of random or pseudo-random bits (201) obtained from a hardware source (not shown) e.g. by sampling one or more physical parameters from the source at a given rate. The bits (201) preferably represent one or more physical characteristics of the hardware source/unit.

Alternatively, the bits are obtained on the basis of other not necessarily hardware-based random or pseudo-random sources.

The bits (201) are compressed by compression means (202) in order to remove redundant information, maximise the entropy and remove any effects due to drifting of statistical characteristics of the hardware-based source/unit. This ensures that the bits (201) after compression are as random as possible.

Preferably, the compression means uses a Lempel-Ziv compression scheme.

Alternatively, the compression means compresses the input bits according to another compression scheme/algorithm like PPM (partial pattern matching), Huffman, Tunstall etc. or other compression schemes used e.g. to obtain better compression, lower implementation costs, and/or execution speed.

The compressed bits are stored in a memory preferably a cyclic buffer (203). Preferably the memory further comprises at least part of a state of a FSM (204). The FSM (204) ensures that the memory state changes at every clock cycle or for every random number generation even though the hardware source does not, which normally will happen quite often since the hardware unit's physical features changes relatively slower than a FSM circuit.

Additional randomness of high quality is introduced in the memory means, if the state of the FSM (204) has good statistical/random properties.

The FSM will as all finite state machines eventually cycle, i.e. return to a previously produced state.

In most applications the FSM will, as shown in this example, operate over a binary symbol field, i.e. the symbols will be "0" and "1". However, other symbol fields could be used just as well as is already well known from the theory of FSM, linear feedback shift registers, etc.

A linear feedback shift register (LFSR) is one example of a FSM with good statistical properties, which thereby increases the overall randomness and entropy in the state of the memory means.

The LFSR is advantageously chosen in such a way that the generated sequence of states will cycle through all the non-zero states, which can be realised by choosing the feedback connections corresponding to a primitive polynomial over the symbol field, see e.g. "The Handbook of Applied Crypotography, by A.J. Menezes, P.C. van Oorschot, and S.A. Vanstone, CRC Press 1997, page 195-196".

The security can even be increased at the cost of a small increase in complexity when the feedback of the LFSR is modified to generate a full-length sequence like a de Bruin sequence, i.e. the LFSR will cycle through all the possible states including the zero state (comprising all "0").

A non-linear feedback shift register (FSR) is a FSM with even better statistical properties, which increases the security even more at the cost of a small increase in complexity of the implementing hardware.

The complete state of the memory means (203; 204) is then used as input to a hashing means (205) in order to enhance the security even further resulting in one or more random or pseudo-random bits.

Applying a hashing or similar one-way" function to the bits of the memory means (203; 204) ensures that it is almost impossible to determine the relationship between the input and the output of the hashing means (205), which increases the security of the random or pseudo-random number/sequence.

Alternatively, a part of the state of the memory means (203; 204) is fed to the hashing means (205).

Examples of hashing functions are SHA-1, RIPEMD-160, MD5 or in general any other suitable hashing or similar one-way function.

Figure 3 illustrates a generalised functional block diagram of a random number generator according to another embodiment of the invention. This figure corresponds to Figure 2 apart from that a plurality of *N* random and/or pseudo-random sources (201; 201') are shown instead of just a single one as in Figure 2.

The random sources (201; 201') may comprise any hardware-based or non hardware-based source capable of being sampled/sensed in one way or another in order to generate symbols representing at least one random and/or pseudo-random number. By random number is meant a number representing a 'truly' random characteristic often sensed/sampled physical parameter(s), and by pseudo-random number is meant a number representing parameters based on a deterministic (although complex) unit like an internal state of a hardware circuit/unit, a clock circuit, CPU, memory state, etc.

Some examples of random sources are: elapsed time between emission of particles during radioactive decay, thermal noise from semiconductor diodes or resistors, etc. or in general any source with a high degree of unpredictability/entropy based on a physical characteristics.

The radioactive source and sensor may e.g. be encapsulated in hard plastic or the like so no third party can determine the parameter(s) thereby breaching the security.

Some examples of pseudo-random sources are: a current internal state of a hardware module/unit/device, date and/or time in a computer system, free available memory, memory state (e.g. in a FSM), speed change of harddisk while performing a reading and/or writing operation, a combination of a number of unsynchronised clocks, etc.

In this way, even better random and/or pseudo-random input is obtained by the generator thereby enhancing the quality of the output random/pseudo-random number(s).

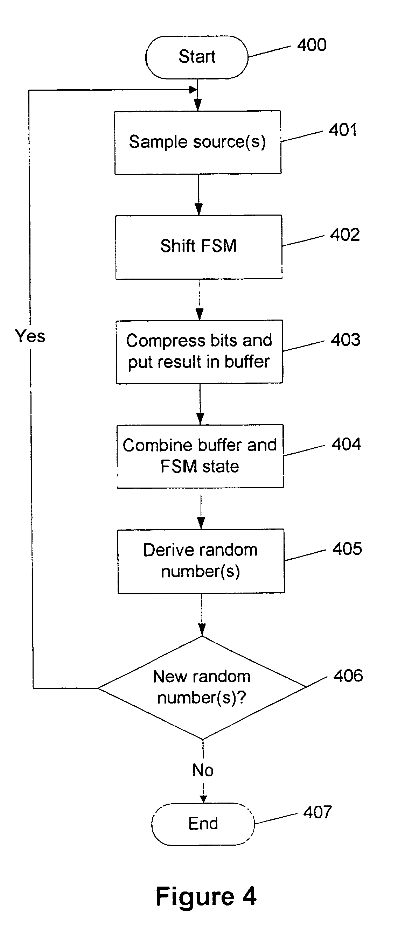

Figure 4 shows a flowchart illustrating the method according to the present invention. The method is initialised and started at step (400). At step (401) a number of bits representing parameters of one or more random and/or pseudo-random sources are obtained e.g. by sampling the source(s). Preferably, at least one source is a hardware-based source, but other sources may be used just as well as described earlier.

At step (402) a FSM is shifted at least one step to another state. The FSM may be any suitable linear feedback shift register (LFSR) or a non-linear feedback shift register (FSR) as described above. This ensures that the input basis (and thereby the final output) of the random and/or pseudo-random number generation is changed at every clock-cycle independently of a change in the source(s).

At step (403) the bits obtained in step (401) are compressed and put in a memory element preferably a cyclic buffer.

The compression is preferably done according to a Lempel-Ziv compression scheme, but other compression schemes/algorithms like PPM (partial pattern matching), Huffman, etc., but other compression schemes used e.g. to obtain better compression, lower implementation costs, and/or execution speed may also be used.

At step (404) the compressed bits and the bits of the present FSM state are combined into a single bit string or the like.

Alternatively, instead of combining the compressed bits and the FSM state they could be stored as a part of a single memory element.

At step (405) the combined compressed bits and the bits of the FSM state are used as input in a hashing function in order to derive at least one random and/or pseudo-random number. The hashing function ensures that it is almost impossible or at least very hard to derive the input of the hashing function on the basis of the output, which enhances the security of the generated random and/or pseudo-random numbers.

The hashing function may be any one of SHA-1, RIPEMD-160, MD5 or in general any other suitable hashing or similar function.

At step (406) a test is made whether further random number(s) are to be generated. If this is the case the method loops back and performs step (401) to (406) once again.

Alternatively, step (402) may also be executed e.g. after step (404) instead of before step (403) or in any other place in the sequence of steps as long as the FSM is shifted at least one step for every derivation of the final random and/or pseudo-random number(s).

Alternatively, steps (402) and (403) may also be executed in parallel or in reverse order (403 before 402).

Figure 5 shows a preferred embodiment of the invention, which may contain the random number generator and/or use the method according to the present invention. Shown is a mobile telephone (501) having display means (504), a keypad (505), an antenna (502), a microphone (506), and a speaker (503). By including the random number generator and/or use the method, high quality random number generation is provided with a relatively small complexity in terms of hardware and thereby small power consumption and/or computational/execution time.

Figure 6 illustrates an example of how the input bits are affected by the compression means. Shown are bits (601) obtained from at least one random and/or pseudo-random source e.g. hardware-based source(s). In this example the distribution of "0" is approximately 25% and the distribution of "1" is approximately 75% which means that the source(s) have generated three times as many "1" as "0" e.g. due to drifting statistical characteristics. This is not an optimal distribution of random bits since one symbol occurs more often than the other, which reduces the security and randomness of the generated random number sequence.

The bits (601) are compressed by compression means (602) according to a Huffman compression scheme or according to another suitable scheme e.g. the ones described earlier, which gives the output bits stored in memory means (603) e.g. as a state where the distribution of "0" is approximately 50% and the distribution of "1" is approximately 50%, since the compression means remove any redundant information from the bits (601) thereby maximising the entropy.

Alternatively, the bits (601) further comprises a state of a FSM as described above, i.e. the bits (601) is made up of bits from a random and/or pseudo-random source(s) and of bits of the FSM.

Figure 7 illustrates a more detailed example of how the input bits may be affected by the compression means and what output is generated.

Shown are compression means (702), receiving an input sequence *u* ∈ {0,1}, and memory means comprising a cyclic buffer (703), comprising a state of code words, and a FSM like a maximum length LFSR (704) also comprising a state. The memory means also comprises MOD 2 adders (705) for combining at least part of the state of the buffer (703) and at least part of the state of the LFSR (704). In this example the LFSR (704) is of length 4 and the buffer (703) is of length 12 but other types and lengths of buffers and FSMs may be used. The buffer (703) and LFSR (704) are shown in their initial state.

The states of the buffer (703) and the LFSR (704) are in this embodiment used as input (706) in the calculation means/hashing means (not shown).

The input sequence *u* has statistical properties, which may be described by a Markov chain and have a corresponding entropy value.

In this particular example, the compression/coder means (702) compresses an input sequence *u* by a fixed source code, like a Tunstall code e.g. having the message set *M* ∈ {"1"; "10"; "100", "000"}, i.e. the sequence *u* of raw/random data is parsed into blocks corresponding to the message sets of the code (C₀ C₁). In this example the Tunstall code encodes messages as (time of *M* is increasing from right to left):

| *M* | C₀ | C₁ |
|---|---|---|
| 1 | 1 | 1 |
| 10 | 1 | 0 |
| 100 | 0 | 1 |
| 000 | 0 | 0 |

That is the input sequence/string *u* are parsed until a "1" or three consecutively "0" are met. If a "1" is met right away "11" are outputted as a codeword; if a single "0" is met before (in time) the "1", then "10" are outputted; if two "0" are met before (in time) the "1", then "01" is outputted; and finally if three "0" are met consecutively without meeting a "1", then "00" is outputted.

For example will the following input sequence *û* (with time increasing from right to left), where the sequence has been separated by a space in order to better show the message sets in the input string:
*û*: 000 000 10 000 1 000 100 1 100 10 1 100 1
generate the following encoded string as output(with time increasing from right to left):
00 00 01 00 11 00 10 11 10 01 11 10 11

Note however, that the source encoder/compression means in this particular example not always will emit a codeword for every input symbol.

The variable length input to fixed length output may be preferred, since the buffer clocking is easier when only fixed size steps are needed.

The generated sequence of code words are put in the cyclic buffer (703) as described later.

Alternatively, other source encoder/compression means may be used e.g. the ones mentioned earlier or in general any other suitable means, which ensures a high degree of entropy and/or low redundancy after processing the input sequence.

The LFSR (704) preferably has the following state transition behaviour:
A state comprising 0000", which transitions to it self, and another state, which transitions according to the following:

| | |
|---|---|
| 0 | "1000" |
| 1 | "1100" |
| 2 | "1110" |
| 3 | "1111" |
| 4 | "0111" |
| 5 | "1011" |
| 6 | "0101" |
| 7 | "1010" |
| 8 | "1101" |
| 9 | "0110" |
| 10 | "0011" |
| 11 | "1001" |
| 12 | "0100" |
| 13 | "0010" |
| 14 | "0001" |

where the state "0001" (14) transitions to state "1000" (0) and the state cycle (0 - 14) is repeated.

Together these two cycles of length 1 and 15, respectively exhaust the complete state space of the FSM/LFSR (704).

In operation the compression means (702) may operate like the following:
1) first shift buffer (703) and LFSR (704)
2) read symbol from the sequence *u*
3) if no complete message block (*M*) then goto 1 else
   if number of shifts since last codeword < 2 then shift buffer (703) once more
   write codeword (C₀ C₁) in the first two positions of the buffer.

Alternatively, the buffer may be clocked exactly twice between two source code words being written.

In the following the states of the buffer (703) and the LFSR (704) are shown while receiving the example input string *û*. The initial values/states of the buffer (703) and LRSR (704) are shown in parenthesis.

The parity of the combination of the two states is also shown.

| ûᵢ | | Buffer | | LFSR | Parity |
|---|---|---|---|---|---|
| | | (000000000000) | | (1000) | |
| 1 | * | 110000000000 | | 1100 | 0 |
| 0 | | 011000000000 | | 1110 | 1 |
| 0 | | 001100000000 | | 1111 | 0 |
| 1 | | 010110000000 | | 0111 | 0 |
| 1 | * | 110101100000 | | 1011 | 0 |
| 0 | | 011010110000 | | 0101 | 1 |
| 1 | | 100101011000 | | 1010 | 1 |
| 0 | | 010010101100 | | 1101 | 0 |
| 0 | | 001001010110 | | 0110 | 1 |
| 1 | | 010100101011 | | 0011 | 0 |
| 1 | * | 110101001010 | ** | 0001 | 1 |
| 0 | | 011010100101 | | 1000 | 1 |
| 0 | | 101101010010 | ** | 0100 | 1 |
| 1 | | 010110101001 | | 0010 | 1 |
| 0 | | 101011010100 | ** | 1001 | 0 |
| 0 | | 010101101010 | | 0100 | 1 |
| 0 | | 001010110101 | | 0010 | 1 |
| 1 | * | 110010101101 | ** | 1001 | 1 |
| 0 | | 111001010110 | ** | 1100 | 1 |
| 0 | | 011100101011 | | 1110 | 0 |
| 0 | | 001110010101 | ** | 0111 | 1 |
| 0 | | 100111001010 | ** | 0011 | 0 |
| 1 | | 100011100101 | | 1001 | 0 |
| 0 | | 110001110010 | ** | 1100 | 0 |
| 0 | | 011000111001 | | 1110 | 1 |
| 0 | | 001100011100 | ** | 0111 | 0 |
| 0 | | 000110001110 | | 1011 | 0 |
| 0 | | 000011000111 | | 0101 | 1 |
| 0 | | 000001100011 | ** | 0010 | 1 |

| | | | | | |
|---|---|---|---|---|---|
| where * denotes an extra shift and ** denotes that the LFSR state is influenced by the buffer. | | | | | |

The states of the buffer and LFSR is used as input to a hashing or similar one-way function in order to greatly increase the security of the generated random numbers/sequence, since it becomes virtually impossible to determine the input of the function on the basis of the output.

Alternatively, the hashing or similar function may use only a part of the states.

As a very simple example, the following hash function is considered:
*h*(x₁, x₂, ... x₁₆) = Σ' x₁ = (x₁ + x₂ ... + x₁₆) MOD 2
where *i* = 1...16 and Σ' denotes the sum MOD 2.

In this very simple example the *h* is equal to the parity of the combined states as indicated in the above table.

In real applications *h* would be a one-way hash function like MD-5, SHA-1, RIPEMD-160 or any other suitable hashing or similar function.

It may be preferred that the length of the buffer is a relative prime to the block size of the code word (not the case in the above example for simplicity).

In a preferred embodiment, the new code words are not written into the buffer thereby overwriting old data but to "add" the code word data into at least one position/state in the buffer. Adding may e.g. be addition MOD 4 or XOR-ring of four bits.

## Claims

1. A random number generator adapted to receive a number of input bits (101; 201, 201'; 601) based on at least one random or pseudo-random source, said generator comprising
• memory means (103; 203, 204; 603; 703, 704) comprising a state of bits,
• compression means (102; 202; 602; 702) for compressing said input bits (101; 201, 201'; 601) resulting in a compressed bit string, which is stored in said memory means (103; 203, 204; 603; 703, 704) as at least a part of said state,
• calculating means (104, 205) for applying a hash function to at least one bit of said state resulting in at least one random number (105),
**characterized in that**
• said state of bits further comprises at least a part of a state of a Finite State Machine (FSM) (204).

2. A random number generator according to claim 1, **characterized in that** said at least one random or pseudo-random source comprises at least one hardware source and said input bits represents at least one physical feature of said at least one hardware source.

3. A random number generator according to claims 1 - 2, **characterized in that** a part of said at least one random number (105) is used to control said Finite State Machine (FSM) (204).

4. A random number generator according to claims 1 - 3, **characterized in that** at least a part of said compressed bits stored in said memory means is used to control said Finite State Machine (FSM) (204).

5. A random number generator according to claims 1-4, **characterized in that** said Finite State Machine (FSM) (204) is a linear feedback shift register (LFSR) (704) or a non-linear feedback shift register (FSR).

6. A random number generator according to claims 1-5, **characterized in that** said memory means (103; 203, 204; 603; 703, 704) comprises a cyclic buffer (203; 703) having a length of at least one bit.

7. A random number generator according to claims 1-6, **characterized in that** said hashing function is any one of:
• SHA-1,
• RIPEMD-160,
• MD5 or
• any other suitable hashing or similar function.

8. A random number generator according to claims 1-7, **characterized in that** said compression means compresses the input bits according to a Lempel-Ziv compression scheme.

9. A random number generator according to any one of the previous claims, **characterized in that** said random number generator is used in a portable device.

10. A random number according to claim 9, **characterized in that** said portable device is a mobile telephone (501).

11. A method of generating at least a random number comprising the steps of
• receiving a number of input bits based on at least one random or pseudo-random source,
• storing in a memory a state of bits,
• compressing said input bits resulting in a compressed bit string, which is stored in said memory as at least a part of said state,
• applying a hash function to at least one bit of said state resulting in at least one random number,
**characterized in that** said state of bits further comprises at least a part of a state of a Finite State Machine (FSM) (204).

12. A method according to claim 11, **characterized in that** said at least one random or pseudo-random source comprises at least one hardware source and said input bits represents at least one physical feature of said at least one hardware source.

13. A method according to claims 11 - 12, **characterized in that** a part of said at least one random number (105) is used to control said Finite State Machine (FSM) (204).

14. A method according according to claims 11 - 13, **characterized in that** at least a part of said compressed bits stored in said memory means is used to control said Finite State Machine (FSM) (204).

15. A method according to claims 11 - 14, **characterized in that** said Finite State Machine (FSM) is a linear feedback shift register (LFSR) or a non-linear feedback shift register (FSR).

16. A method according to claims 11 - 15, **characterized in that** said memory means comprises a cyclic buffer having a length of at least one bit.

17. A method according to claims 11 - 16, **characterized in that** said hashing function is any one of:
• SHA-1,
• RIPEMD-160,
• MD5 or
any other suitable hashing or similar function.

18. A method according to claims 11 - 17, **characterized in that** said compression means compresses the input bits according to a Lempel-Ziv compression scheme.

19. A method according to any one of the claims 11 - 18, **characterized in that** said method is used in a portable device.

20. A method according to any one of the claims 11 - 19, **characterized in that** said method is used in a mobile telephone.

21. A computer-readable medium having stored thereon instructions for causing a processing unit to execute the method according to any one of claims 11 - 20.

22. A computer system comprising means adapted to execute a program, where the program, when executed, causes the computer system to perform the method according to claims 11 - 20.

## Patentansprüche

1. Zufallszahlengenerator, der ausgebildet ist zum Empfangen einer Anzahl von Eingabebits (101; 201, 201'; 601) basierend auf wenigstens einer Zufalls- oder Pseudo-Zufallsquelle, wobei der Generator umfasst:
- eine Speichereinrichtung (103; 203, 204; 603; 703, 704) mit einem Zustand von Bits,
- eine Komprimierungseinrichtung (102; 202; 602; 702) zum Komprimieren der Eingabebits (101; 201, 201'; 601), resultierend in einer verdichteten Bitkette, die in der Speichereinrichtung (103; 203, 204; 603; 703, 704) als wenigstens ein Teil des Zustands gespeichert wird,
- eine Berechnungseinrichtung (104, 205) zum Anwenden einer Hash-Funktion auf wenigstens ein Bit des Zustands, resultierend in wenigstens einer Zufallszahl (105),
**dadurch gekennzeichnet, dass**
- der Zustand von Bits ferner wenigstens einen Teil eines Zustands einer Finite State Machine (FSM) (204) umfasst.

2. Zufallszahlengenerator gemäß Anspruch 1, **dadurch gekennzeichnet, dass** die wenigstens eine Zufalls- oder Pseudo-Zufallsquelle wenigstens eine Hardwarequelle umfasst und die Eingabebits wenigstens ein physikalisches Merkmal der wenigstens einen Hardwarequelle darstellen.

3. Zufallszahlengenerator gemäß einem der Ansprüche 1 bis 2, **dadurch gekennzeichnet, dass** ein Teil der wenigstens einen Zufallszahl (105) zum Steuern der Finite State Machine (FSM) (204) verwendet wird.

4. Zufallszahlengenerator gemäß einem der Ansprüche 1 bis 3, **dadurch gekennzeichnet, dass** wenigstens ein Teil der in der Speichereinrichtung gespeicherten komprimierten Bits zum Steuern der Finite State Machine (FSM) (204) verwendet wird.

5. Zufallszahlengenerator gemäß einem der Ansprüche 1 bis 4, **dadurch gekennzeichnet, dass** die Finite State Machine (FSM) (204) ein lineares Rückkopplungsschieberegister (LFSR) (704) oder ein nichtlineares Rückkopplungsschieberegister (FSR) ist.

6. Zufallszahlengenerator gemäß einem der Ansprüche 1 bis 5, **dadurch gekennzeichnet, dass** die Speichereinrichtung (103; 203, 204; 603; 703, 704) einen zyklischen Puffer (203; 703) mit einer Länge von wenigstens einem Bit umfasst.

7. Zufallszahlengenerator gemäß einem der Ansprüche 1 bis 6, **dadurch gekennzeichnet, dass** die Hash-Funktion irgendeine ist von:
- SHA-1,
- RIPEMD-160,
- MD5 oder
- irgendeiner anderen geeigneten Hash-Funktion oder ähnlichen Funktion.

8. Zufallszahlengenerator gemäß einem der Ansprüche 1 bis 7, **dadurch gekennzeichnet, dass** die Komprimierungseinrichtung die Eingabebits gemäß einem Lempel-Ziv-Komprimierungsschema komprimiert.

9. Zufallszahlengenerator gemäß einem der vorigen Ansprüche, **dadurch gekennzeichnet, dass** der Zufallszahlengenerator in einer tragbaren Vorrichtung verwendet wird.

10. Zufallszahlengenerator gemäß Anspruch 9, **dadurch gekennzeichnet, dass** die tragbare Vorrichtung ein Mobiltelefon (501) ist.

11. Verfahren zum Erzeugen wenigstens einer Zufallszahl mit den Schritten zum:
- Empfangen einer Anzahl von Eingabebits basierend auf wenigstens einer Zufalls- oder Pseudo-Zufallsquelle,
- Speichern in einem Speicher eines Zustands von Bits,
- Komprimieren der Eingabebits, resultierend in einer verdichteten Bitkette, die in dem Speicher als wenigstens ein Teil des Zustands gespeichert wird,
- Anwenden einer Hash-Funktion auf wenigstens ein Bit des Zustands, resultierend in wenigstens einer Zufallszahl,
**dadurch gekennzeichnet, dass** der Zustand von Bits ferner wenigstens einen Teil eines Zustands einer Finite State Machine (FSM) (204) umfasst.

12. Verfahren gemäß Anspruch 11, **dadurch gekennzeichnet, dass** die wenigstens eine Zufalls- oder Pseudo-Zufallsquelle wenigstens eine Hardwarequelle umfasst und die Eingabebits wenigstens ein physikalisches Merkmal der wenigstens einen Hardwarequelle darstellen.

13. Verfahren gemäß einem der Ansprüche 11 bis 12, **dadurch gekennzeichnet, dass** ein Teil der wenigstens einen Zufallszahl (105) zum Steuern der Finite State Machine (FSM) (204) verwendet wird.

14. Verfahren gemäß einem der Ansprüche 11 bis 13, **dadurch gekennzeichnet, dass** wenigstens ein Teil der in der Speichereinrichtung gespeicherten komprimierten Bits zum Steuern der Finite State Machine (FSM) (204) verwendet wird.

15. Verfahren gemäß einem der Ansprüche 11 bis 14, **dadurch gekennzeichnet, dass** die Finite State Machine (FSM) ein lineares Rückkopplungsschieberegister (LFSR) oder ein nichtlineares Rückkopplungsschieberegister (FSR) ist.

16. Verfahren gemäß einem der Ansprüche 11 bis 15, **dadurch gekennzeichnet, dass** die Speichereinrichtung einen zyklischen Puffer mit einer Länge von wenigstens einem Bit umfasst.

17. Verfahren gemäß einem der Ansprüche 11 bis 16, **dadurch gekennzeichnet, dass** die Hash-Funktion irgendeine ist von:
- SHA-1,
- RIPEMD-160,
- MD5 oder
- irgendeiner anderen geeigneten Hash-Funktion oder ähnlichen Funktion.

18. Verfahren gemäß einem der Ansprüche 11 bis 17, **dadurch gekennzeichnet, dass** die Komprimierungseinrichtung die Eingabebits gemäß einem Lempel-Ziv-Komprimierungsschema komprimiert.

19. Verfahren gemäß einem der Ansprüche 11 bis 18, **dadurch gekennzeichnet, dass** das Verfahren in einer tragbaren Vorrichtung verwendet wird.

20. Verfahren gemäß einem der Ansprüche 11 bis 19, **dadurch gekennzeichnet, dass** das Verfahren in einem Mobiltelefon verwendet wird.

21. Computer-lesbares Medium mit darauf gespeicherten Anweisungen zum Bewirken, dass eine Verarbeitungseinheit das Verfahren gemäß einem der Ansprüche 11-20 ausführt.

22. Computersystem mit Einrichtungen, die ausgebildet sind zum Ausführen eines Programms, wobei das Programm beim Ausführen bewirkt, dass das Computersystem das Verfahren gemäß einem der Ansprüche 11-20 ausführt.

## Revendications

1. Générateur de nombres aléatoires apte à recevoir un certain nombre de bits d'entrée (101 ; 201, 201' ; 601) sur la base d'au moins une source aléatoire ou pseudo-aléatoire, ledit générateur comprenant :
• un moyen à mémoire (103 ; 203, 204 ; 603 ; 703, 704) comprenant un état de bits,
• un moyen de compression (102 ; 202 ; 602 ; 702) pour comprimer lesdits bits d'entrée (101 ; 201, 201' ; 601) avec pour résultat une chaîne de bits comprimés qui est stockée dans ledit moyen à mémoire (103 ; 203, 204 ; 603 ; 703, 704) en tant qu'au moins une partie dudit état,
• un moyen de calcul (104, 205) pour appliquer une fonction de hachage à au moins un bit dudit état avec pour résultat au moins un nombre aléatoire (105),
**caractérisé en ce que**
• ledit état des bits comprend en outre au moins une partie d'un état d'un Automate Fini (FSM : Finite State Machine) (204).

2. Générateur de nombres aléatoires selon la revendication 1, **caractérisé en ce que** ladite au moins une source aléatoire ou pseudo-aléatoire comprend au moins une source matérielle et **en ce que** lesdits bits d'entrée représentent au moins une caractéristique physique de ladite au moins une source matérielle.

3. Générateur de nombres aléatoires selon les revendications 1-2, **caractérisé en ce qu'**une partie dudit au moins un nombre aléatoire (105) est utilisée pour commander l'Automate Fini (FSM) (204).

4. Générateur de nombres aléatoires selon les revendications 1-3, **caractérisé en ce qu'**au moins une partie desdits bits comprimés stockés dans ledit moyen à mémoire est utilisée pour commander ledit Automate Fini (FSM) (204).

5. Générateur de nombres aléatoires selon les revendications 1-4, **caractérisé en ce que** ledit Automate Fini (FSM) (204) est un registre à décalage à contre-réaction linéaire (LFSR : Linear Feedback Shift Register) (704) ou un registre à décalage à contre-réaction non linéaire (FSR : Feedback Shift Register).

6. Générateur de nombres aléatoires selon les revendications 1-5, **caractérisé en ce que** ledit moyen à mémoire (103 ; 203, 204 ; 603 ; 703, 704) comprend un tampon cyclique (203 ; 703) ayant une longueur d'au moins un bit.

7. Générateur de nombres aléatoires selon les revendications 1-6, **caractérisé en ce que** ladite fonction de hachage est l'une quelconque des suivantes :
• SHA-1,
• RIPEMD-160,
• MD5 ou
• toute autre fonction de hachage ou similaire.

8. Générateur de nombres aléatoires selon les revendications 1-7, **caractérisé en ce que** ledit moyen de compression comprime les bits d'entrée conformément à une technique de compression de Lempel-Ziv.

9. Générateur de nombres aléatoires selon l'une quelconque des revendications précédentes, **caractérisé en ce que** ledit générateur de nombres aléatoires est utilisé dans un dispositif portatif.

10. Générateur de nombres aléatoires selon la revendication 9, **caractérisé en ce que** ledit dispositif portatif est un téléphone mobile (501).

11. Procédé de génération d'au moins un nombre aléatoire, comprenant les étapes suivantes :
• réception d'un certain nombre de bits d'entrée sur la base d'au moins une source aléatoire ou pseudo-aléatoire,
• stockage d'un état de bits dans une mémoire,
• compression desdits bits d'entrée avec pour résultat une chaîne de bits comprimés, qui est stockée dans ladite mémoire en tant qu'au moins une partie dudit état,
• application d'une fonction de hachage à au moins un bit dudit état avec pour résultat au moins un nombre aléatoire,
**caractérisé en ce que**
• ledit état des bits comprend en outre au moins une partie d'un état d'un Automate Fini (FSM) (204).

12. Procédé selon la revendication 11, **caractérisé en ce que** ladite au moins une source aléatoire ou pseudo aléatoire comprend au moins une source matérielle et lesdits bits d'entrée représentent au moins une caractéristique physique de ladite au moins une source matérielle.

13. Procédé selon les revendications 11-12, **caractérisé en ce qu'**une partie dudit au moins un nombre aléatoire (105) est utilisée pour commander ledit Automate Fini (FSM) (204).

14. Procédé selon les revendications 11-13, **caractérisé en ce qu'**au moins une partie desdits bits comprimés stockés dans ledit moyen à mémoire est utilisée pour commander ledit Automate Fini (FSM) (204).

15. Procédé selon les revendications 11-14, **caractérisé en ce que** ledit Automate Fini (FSM) (204) est un registre à décalage à contre-réaction linéaire (LFSR) ou un registre à décalage à contre-réaction non linéaire (FSR).

16. Procédé selon les revendications 11-15, **caractérisé en ce que** ledit moyen à mémoire comprend un tampon cyclique ayant une longueur d'au moins un bit.

17. Procédé selon les revendications 11-16, **caractérisé en ce que** ladite fonction de hachage est l'une quelconque des suivantes :
• SHA-1,
• RIPEMD-160,
• MD5 ou
toute autre fonction de hachage ou similaire.

18. Procédé selon les revendications 11-17, **caractérisé en ce que** ledit moyen de compression comprime les bits d'entrée conformément à une technique de compression de Lempel-Ziv.

19. Procédé selon l'une quelconque des revendications 11-18, **caractérisé en ce que** ledit procédé est utilisé dans un dispositif portatif.

20. Procédé selon l'une quelconque des revendications 11-19, **caractérisé en ce que** ledit procédé est utilisé dans un téléphone mobile.

21. Support lisible par ordinateur sur lequel sont stockées les instructions faisant en sorte qu'une unité de traitement exécute le procédé selon l'une quelconque des revendications 11-20.

22. Système informatique comprenant un moyen apte à exécuter un programme, dans lequel le programme, lorsqu'il est exécuté, fait en sorte que le système informatique exécute le procédé selon les revendications 11-20.
